# EUROPEAN PATENT SPECIFICATION

(11) **EP 3 733 515 B1**
(45) Date of publication and mention of the grant of the patent: **16.11.2022**
(21) Application number: 19216285.7
(22) Date of filing: 13.12.2019
(51) Int. Cl.: B64D 11/04, B64D 11/00

(54) **GALLEY CART WHEEL TRACK**
BORDKÜCHENWAGENRADSCHIENE
EMPATTEMENT DE ROUE DE CHARIOT D'OFFICE

(30) Priority: 29.04.2019 US 201916397014
(43) Date of publication of application: 04.11.2020
(73) Proprietor: B/E Aerospace, Inc., Winston-Salem, NC 27105 (US)
(72) Inventor: CLAFLIN, Shawn A., Seattle, WA 98103 (US); POPPLE, Brandon L., Everett, WA 98208 (US)
(74) Representative: Dehns

(56) References cited:
- EP-A1- 2 944 538
- EP-A1- 3 650 345
- WO-A1-2015/110636
- DE-A1-102013 006 145
- DE-A1-102017 128 345
- DE-U1-202008 012 692
- US-A1- 2003 001 468
- US-A1- 2019 023 070

## Description

### BACKGROUND

Aircraft galley structures may incorporate cart compartments and cart bays configured for temporary storage of galley carts (e.g., service carts, trolleys). Cart bays may be configured to store galley carts while minimizing the space they occupy, e.g., the inner dimensions of a cart bay may be as compact as possible. Galley carts may include wheels on casters mounted to their undersides, via which the galley carts may be inserted into their respective cart bays for secure storage (e.g., during taxi, takeoff and landing segments). The galley carts may similarly be removed from their bays for in-seat catering or food service, via which the carts may be transported along aircraft aisles and ultimately returned to their bays. The entry and exit of a galley cart into its cart bay may be guided by rubstrips or similar barriers on the walls of the cart bay.

The casters of the galley carts are designed to allow full 360-degree rotation by the cart wheels. When a galley cart is inserted into a cart bay, its caster wheels will all be oriented in the same direction, e.g., toward the back of the cart bay. When the galley cart is next removed from the cart bay, the initial reaction of the underside casters is to rotate the wheels 180 degrees to face the opposite direction. As the cart bay is too narrow to accommodate a full rotation, the result may be a caster or wheel rotation into the cart bay wall (or into a nearby rubstrip) at an angle associated with a binding or jamming of the wheel into the rubstrip. This binding or jamming action may significantly increase the force required to remove a galley cart from its cart bay. As multiple galley carts may be removed from, and reinserted into, their cart bays multiple times during the course of a normal flight, the cumulative additional force may vastly increase the workload for flight attendants and cabin crew. Further, random damage due to wheel binding or jamming may increase wear and tear on the sidewalls and rubstrips of the galley cart bays as well as the galley carts themselves. WO 2015/110636 A1 describes a functional piece of furniture for an aircraft. DE 10 2013 006145 A1 describes a cart for an aircraft. US 2019/023070 A1 describes flexible gallery cart caster guides.

### SUMMARY

A galley cart compartment according to claim 1 is disclosed. The galley cart compartment includes an interior compartment (e.g., interior space) of an aircraft galley complex (galley structure, galley monument). The interior compartment includes left and right sidewalls and a floor, which may be the cabin floor. The interior compartment is capable of receiving a galley cart (e.g., trolley) insertable into, and removable from, the interior compartment along an axis of entry (e.g., parallel to the depth of the interior compartment). The galley cart has an outer housing with left and right sides and an underside, to which casters are pivotably or rotatably attached on the left and right sides. Each caster has a left and right (inside and outside) wheel, the two wheels separated by an interior wheel gap or space. Tracks extend along the cabin floor parallel to the axis of entry (e.g., from the front to the rear of the interior compartment), a left track and a right track positioned to engage respectively with the left-side and right-side casters. Each track includes a guide rail capable of partially extending into the wheel gap, preventing the caster wheels from laterally rotating when the galley cart is first removed from the interior compartment.

This Summary is provided solely as an introduction to subject matter that is fully described in the Detailed Description and Drawings. The Summary should not be considered to describe essential features nor be used to determine the scope of the Claims. Moreover, it is to be understood that both the foregoing Summary and the following Detailed Description are example and explanatory only and are not necessarily restrictive of the subject matter claimed.

### BRIEF DESCRIPTION OF THE DRAWINGS

The detailed description is described with reference to the accompanying figures. The use of the same reference numbers in different instances in the description and the figures may indicate similar or identical items. Various embodiments or examples ("examples") of the present disclosure are disclosed in the following detailed description and the accompanying drawings. The drawings are not necessarily to scale. In general, operations of disclosed processes may be performed in an arbitrary order, unless otherwise provided in the claims. In the drawings:
FIG. 1 is an isometric view illustrating a galley cart compartment in accordance with example embodiments of this disclosure;
FIG. 2 is a detailed view of a galley cart and track of the galley cart compartment of FIG. 1;
FIG. 3 is an isometric view illustrating a galley cart compartment in accordance with example embodiments of this disclosure;
FIG. 4 is an isometric view illustrating a galley cart compartment in accordance with example embodiments of this disclosure;
FIGS. 5A and 5B are respectively isometric and forward views illustrating a guide rail of the galley cart compartment of FIGS. 1, 3, and 4; and
FIG. 6 is a forward view illustrating a galley cart track system of the galley cart compartment of FIGS. 1 through 5B.

### DETAILED DESCRIPTION

Before explaining one or more embodiments of the disclosure in detail, it is to be understood that the embodiments are not limited in their application to the details of construction and the arrangement of the components or steps or methodologies set forth in the following description or illustrated in the drawings. In the following detailed description of embodiments, numerous specific details may be set forth in order to provide a more thorough understanding of the disclosure. However, it will be apparent to one of ordinary skill in the art having the benefit of the instant disclosure that the embodiments disclosed herein may be practiced without some of these specific details. In other instances, well-known features may not be described in detail to avoid unnecessarily complicating the instant disclosure.

As used herein a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only and should not be construed to limit the disclosure in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of "a" or "an" may be employed to describe elements and components of embodiments disclosed herein. This is done merely for convenience and "a" and "an" are intended to include "one" or "at least one," and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment disclosed herein. The appearances of the phrase "in some embodiments" in various places in the specification are not necessarily all referring to the same embodiment, and embodiments may include one or more of the features expressly described or inherently present herein, or any combination of sub-combination of two or more such features, along with any other features which may not necessarily be expressly described or inherently present in the instant disclosure.

A cart wheel track system for cart compartments (e.g., cart bays) is disclosed. The cart bays may be incorporated into aircraft galley configurations, e.g., galley structures, galley monuments, or structures otherwise mounted in an aircraft passenger cabin and incorporating cart bays. Guide rails on the floor of the cart bays prevent the cart wheels from rotating on removal from the bay, facilitating easy removal of the cart. Further, the guide rails may assist in the smooth return of the cart to its bay, preventing unnecessary impact with the compartment sidewalls or rubstrips attached thereto.

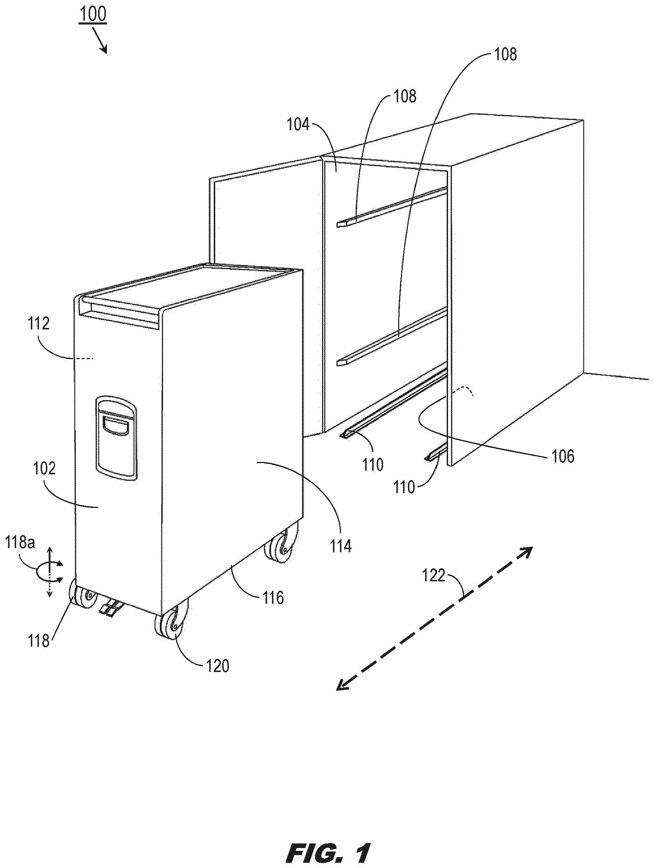

Referring to FIG. 1, a galley cart compartment 100 is disclosed. The galley cart compartment 100 may be configured to accept and securely store a galley cart 102, and may include a left sidewall 104, a right sidewall 106, rubstrips 108, and tracks 110. The galley cart 102 may include an exterior housing having a left side 112, a right side 114, and an underside 116 with left-side casters 118 and right-side casters 120 attached thereto. The galley cart 102 may be inserted into, and removed from, the galley cart compartment 100 along a fixed axis of entry 122, e.g., parallel to the left and right sidewalls 104, 106 and rubstrips 108. Each left-side caster 118 and right-side caster 120 may be rotatably attached to the underside 116 of the galley cart 102, such that the left-side and right-side casters may be capable of a full 360 degrees of rotation (118a) relative to the galley cart 102.

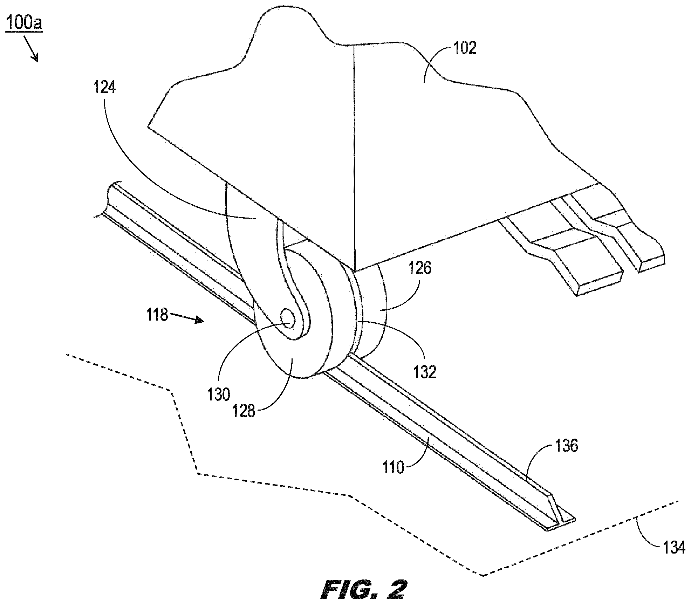

Referring to FIG. 2, a galley cart compartment 100a is disclosed. The galley cart compartment 100a may be implemented and may function similarly to the galley cart compartment 100 of FIG. 1, except that each left-side caster 118 (and each right-side caster 120, FIG. 1) may include a fork 124 enclosing two wheels, an inside wheel 126 and an outside wheel 128 (the outside wheel being proximate to the left sidewall 104), sharing a common axle 130 and separated by a wheel gap 132.

In embodiments, each track 110 may be set into the floor 134 of the galley cart compartment 100a (which floor may be the galley floor or the floor of the passenger cabin). The tracks 110 may be set into the floor 134 by bolting, fastening, adhering, or any other appropriate means for securing the guide rails to the floor in the desired alignment.

In embodiments, the tracks 110 includes guide rails 136 extending upward into the wheel gap 132 between the inside and outside wheels 126, 128 such that, when a crewmember initiates the removal of the galley cart 102a from the galley cart compartment 100a into which the galley cart is fully inserted (e.g., by pulling outward, substantially parallel to the axis of entry (122, FIG. 1) on a handle attached to the forward face of the exterior housing of the galley cart), the left-side casters 118 are restrained from rotating 180 degrees. Instead, the inside wheels 126 and outside wheels 128 of each left-side caster 118 follow the guide rails 136, remaining substantially parallel to the axis of entry 122 as the galley cart 102 is removed from the galley cart compartment 100a. Similarly, tracks 110 and guide rails 136 extend between the inside and outside wheels 126, 128 of the right-side casters (120, FIG. 1), preventing the right-side casters 120 from rotating more than a trace amount when the galley cart 102 is removed from the galley compartment 100a. The guide rails 136 may be of any appropriate shape to extend partially into the wheel gaps 132 and prevent lateral rotation of the left-side and right-side casters 118, 120.

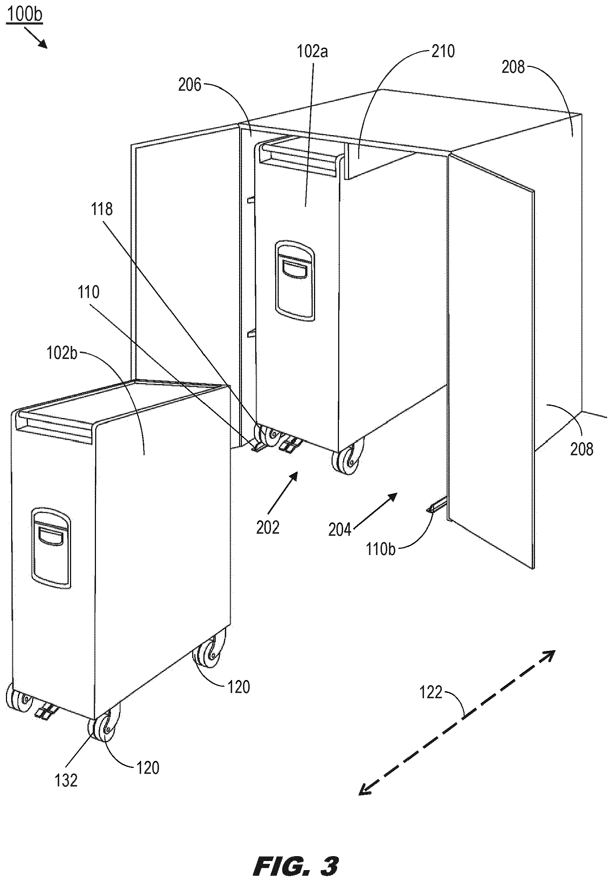

Referring to FIG. 3, a galley cart compartment 100b is disclosed. The galley cart compartment 100b may be implemented and may function similarly to the galley cart compartment 100a of FIG. 2, except that the galley cart compartment 100b may include two adjacent left and right cart bays 202, 204 respectively configured to receive and store galley carts 102a-b.

In embodiments, the left cart bay 202 may be adjacent to a left compartment wall 206 of the galley cart compartment 100b while the right cart bay 204 is adjacent to a right compartment wall 208 of the galley cart compartment. The left and right cart bays 202, 204 may be separated by a central partition 210 which may assist in guiding the respective galley carts 102a-b into, and out of, their respective left and right cart bays (e.g., parallel to the axis of entry 122).

In embodiments, the left cart bay 202 may incorporate a left-side track 110a proximate to the left compartment wall 206 and positioned to engage with the wheel gaps 136 of the left-side casters 118 of the galley cart 102a. Similarly, the right cart bay 204 may incorporate a right-side track 110b proximate to the right compartment wall 208 and positioned to engage with the wheel gaps 132 of the right-side casters 120 of the galley cart 102b.

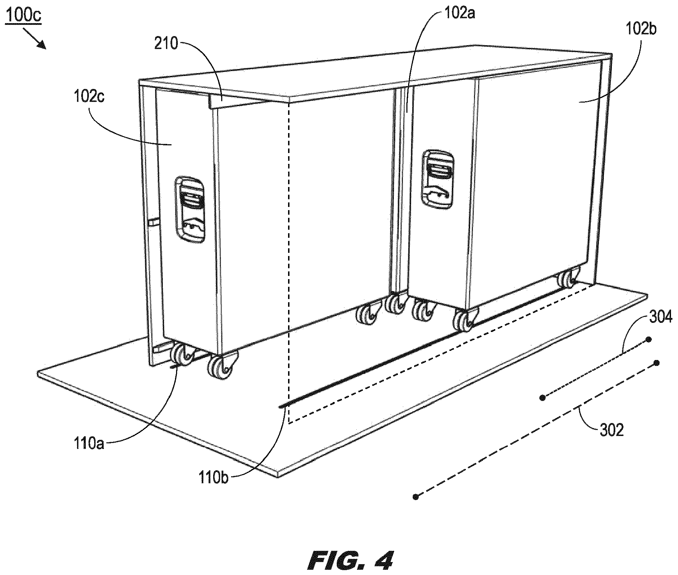

Referring to FIG. 4, a galley cart compartment 100c is disclosed. The galley cart compartment 100c may be implemented and may function similarly to the galley cart compartment 100b of FIG. 3, except that the galley cart compartment 100c may have a compartment depth 302 approximately twice that of the cart depth 304 of the galley carts 102a-c.

In some embodiments, the left and right tracks 110a-b may extend along the cabin floor 134 of the galley cart compartment 100c for a sufficient length that the galley cart compartment 100c may accommodate, in front of the galley carts 102a-b, a second row of galley carts (102c). For example, the galley carts 102a-b may be inserted into the galley cart compartment 100c and guided along straight paths by the left and right tracks 110a-b and the central partition 210 to the rear of the galley cart compartment 100c. Flight attendants and cabin crew may then be able to insert the second galley cart 102c into the galley cart compartment 100c (e.g., guided by the left track 110a and central partition 210). In some embodiments, the galley cart compartment 100c may be equipped with any appropriate means of removing the galley carts 102a-b from the rear of the galley cart compartment once the galley cart 102c is removed.

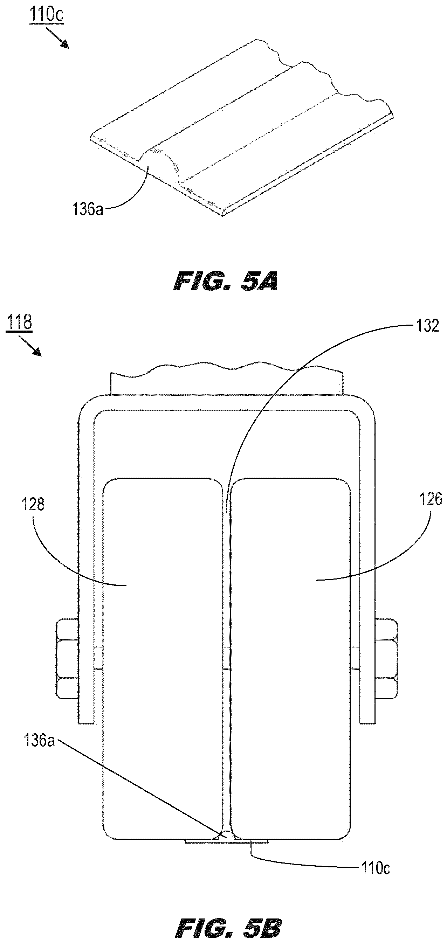

Referring to FIGS. 5A and 5B, a track 110c is disclosed. The track 110c may be implemented and may function similarly to the tracks 110, 110a-b of FIGS. 1-4, except that the track 110c may incorporate a substantially rounded guide rail 136a. For example, the rounded guide rail 136a may be rounded or substantially spherical at the front end of the track 110c, where the guide rail first encounters the wheel gap 132 between the inside and outside wheels 126, 128 of the caster 118, and taper into another shape along its length. Alternatively, the rounded guide rail 136a may present a uniformly round cross-section at any point along its length. For example, the rounded guide rail 136a may assist the inside and outside wheels 126, 128 in self-aligning to the track 110c when first introduced to the galley cart compartment (100, 100a-c; FIGS. 1-4), while projecting far enough into the wheel gap 132 to keep the inside and outside wheels aligned once the caster 118 is fully engaged with the track 110c.

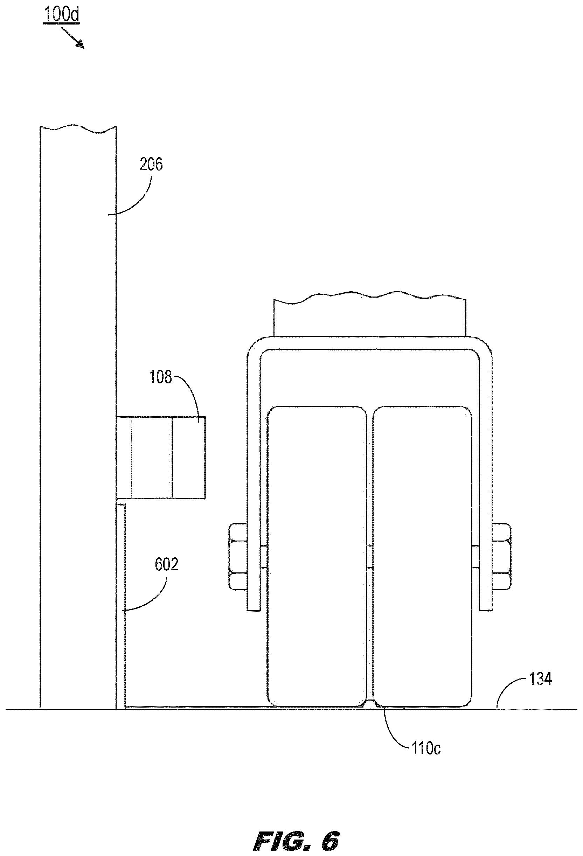

Referring to FIG. 6, a galley cart compartment 100d is disclosed. The galley cart compartment 100d may be implemented and may function similarly to the galley cart compartments 100, 100c of FIGS. 1-5B, except that the left track 110c may be mounted to the left compartment wall 206 (or the left sidewall 104, FIG. 1) as opposed to the cabin floor 134. For example, the left track 110c may be incorporated into a mount (602) attached to the left compartment wall 206.

In some embodiments, the mount 602 may be attached or mounted to the lower left rubstrip 108, and the rubstrip in turn mounted to the left compartment wall 206. In some embodiments, the left track 110a and the left rubstrip 108 may be incorporated into a single mount 602 attachable or mountable to the left compartment wall 206. In embodiments, the right track (110b, FIG. 3) may be similarly incorporated into the right compartment wall 208 (or the right sidewall 106 (FIG. 1), or the right rubstrip (108, FIG. 1)).

It is to be understood that embodiments of the methods disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

Components illustrated and described herein are merely examples of a system/device and components that may be used to implement embodiments of the inventive concepts and may be replaced with other devices and components without departing from the scope of the claims. Furthermore, any dimensions, degrees, and/or numerical ranges provided herein are to be understood as non-limiting examples unless otherwise specified in the claims.

## Claims

1. A galley cart compartment (100), comprising:
an interior compartment (100a) associated with an aircraft galley complex, the interior compartment bounded by at least a left sidewall (104), a right sidewall (106), and a cabin floor (134);
the galley cart compartment further comprising
a galley cart (102) insertable into and removable from the interior compartment along an axis of entry (122), the interior compartment configured to accommodate the galley cart;
the galley cart comprising:
an exterior housing including at least a left side (112), a right side (114), and an underside (116);
and
a left-side plurality of casters (118) and a right-side plurality of casters (120) pivotably attached to the underside, each caster including a left wheel and a right wheel separated by a wheel gap; and
a set of tracks (110) proximate to the cabin floor and parallel to the axis of entry, the set of tracks comprising:
a left track proximate to the left sidewall, the left track including a left guide rail (136) configured for extending into at least one wheel gap of the left-side plurality of casters; and
a right track proximate to the right sidewall, the right track including a right guide rail (136) configured for extending into at least one wheel gap of the right-side plurality of casters.

2. The galley cart compartment of claim 1, wherein at least one of the left track and the right track are mounted to the cabin floor.

3. The galley cart compartment of claim 1 or 2, wherein:
the left track is mounted to the left sidewall;
and
the right track is mounted to the right sidewall.

4. The galley cart compartment of any preceding claim, further comprising:
at least one left rubstrip (108) mounted to the left sidewall and extending parallel to the axis of entry;
and
at least one right rubstrip (108) mounted to the right sidewall and extending parallel to the axis of entry.

5. The galley cart compartment of claim 4, wherein:
the left track is mounted to the left rubstrip;
and
the right track is mounted to the right rubstrip, or wherein:
the left track and the left rubstrip are collectively mounted to the left sidewall; and
the right track and the right rubstrip are collectively mounted to the right sidewall.

6. The galley cart compartment of any preceding claim, wherein at least one of the left guide rail and the right guide rail has at least one of a rounded edge and a rounded cross section.

7. The galley cart compartment of any preceding claim, wherein the galley cart is a first galley cart and:
the galley cart has a cart depth parallel to the axis of entry;
the interior compartment has a compartment depth parallel to the axis of entry, the compartment depth at least twice the cart depth;
and
the interior compartment is configured to accommodate at least the first galley cart and a second galley cart, the second galley cart also having the cart depth.

## Patentansprüche

1. Bordküchenwagenabteil (100), umfassend:
ein Innenabteil (100a), das einem Bordküchenkomplex eines Flugzeugs zugeordnet ist, wobei das Innenabteil durch mindestens eine linke Seitenwand (104), eine rechte Seitenwand (106) und einen Kabinenboden (134) begrenzt ist;
wobei das Bordküchenwagenabteil ferner einen Bordküchenwagen (102) umfasst, der entlang einer Eintrittsachse (122) in das Innenabteil einführbar und daraus entfernbar ist, wobei das Innenabteil so konfiguriert ist, dass es den Bordküchenwagen aufnimmt;
wobei der Bordküchenwagen Folgendes umfasst:
ein Außengehäuse, das mindestens eine linke Seite (112), eine rechte Seite (114) und eine Unterseite (116) enthält;
und
eine linksseitige Vielzahl von Laufrollen (118) und eine rechtsseitige Vielzahl von Laufrollen (120), die schwenkbar an der Unterseite angebracht sind, wobei jede Laufrolle ein linkes Rad und ein rechtes Rad enthält, die durch einen Radspalt getrennt sind;
und
einen Spursatz (110) in der Nähe des Kabinenbodens und parallel zu der Eintrittsachse, wobei der Spursatz Folgendes umfasst:
eine linke Spur in der Nähe der linken Seitenwand, wobei die linke Spur eine linke Führungsschiene (136) enthält, die so konfiguriert ist, dass sie sich in mindestens einen Radspalt der linksseitigen Vielzahl von Laufrollen erstreckt;
und
eine rechte Spur in der Nähe der rechten Seitenwand, wobei die rechte Spur eine rechte Führungsschiene (136) enthält, die so konfiguriert ist, dass sie sich in mindestens einen Radspalt der rechtsseitigen Vielzahl von Laufrollen erstreckt.

2. Bordküchenwagenabteil nach Anspruch 1, wobei mindestens eine der linken Spur und der rechten Spur an dem Kabinenboden montiert ist.

3. Bordküchenwagenabteil nach Anspruch 1 oder 2, wobei:
die linke Spur an der linken Seitenwand montiert ist; und
die rechte Spur an der rechten Seitenwand montiert ist.

4. Bordküchenwagenabteil nach einem der vorhergehenden Ansprüche, ferner umfassend:
mindestens einen linken Scheuerstreifen (108), der an der linken Seitenwand montiert ist und sich parallel zu der Eintrittsachse erstreckt;
und
mindestens einen rechten Scheuerstreifen (108), der an der rechten Seitenwand montiert ist und sich parallel zu der Eintrittsachse erstreckt.

5. Bordküchenwagenabteil nach Anspruch 4, wobei:
die linke Spur an dem linken Scheuerstreifen montiert ist; und
die rechte Spur an dem rechten Scheuerstreifen montiert ist, oder wobei:
die linke Spur und der linke Scheuerstreifen gemeinsam an der linken Seitenwand montiert sind;
und
die rechte Spur und der rechte Scheuerstreifen gemeinsam an der rechten Seitenwand montiert sind.

6. Bordküchenwagenabteil nach einem der vorhergehenden Ansprüche, wobei mindestens eine der linken Führungsschiene und der rechten Führungsschiene mindestens eines von einer abgerundeten Kante und einem abgerundeten Querschnitt aufweist.

7. Bordküchenwagenabteil nach einem der vorhergehenden Ansprüche, wobei der Bordküchenwagen ein erster Bordküchenwagen ist und:
der Bordküchenwagen eine Wagentiefe parallel zu der Eintrittsachse aufweist;
das Innenabteil eine Abteiltiefe parallel zu der Eintrittsachse aufweist, wobei die Abteiltiefe mindestens das Doppelte der Wagentiefe beträgt;
und
das Innenabteil so konfiguriert ist, dass es zumindest den ersten Bordküchenwagen und einen zweiten Bordküchenwagen aufnimmt, wobei der zweite Bordküchenwagen auch die Wagentiefe aufweist.

## Revendications

1. Un compartiment de chariot de cuisine (100), comprenant :
un compartiment intérieur (100a) associé à un complexe de cuisine d'aéronef, le compartiment intérieur étant délimité par au moins une paroi latérale gauche (104), une paroi latérale droite (106) et un plancher de cabine (134) ;
le compartiment de chariot de cuisine comprenant en outre un chariot de cuisine (102) insérable dans et amovible du compartiment intérieur le long d'un axe d'entrée (122), le compartiment intérieur étant configuré pour recevoir le chariot de cuisine ;
le chariot de cuisine comprenant :
un boîtier extérieur comportant au moins un côté gauche (112), un côté droit (114) et un dessous (116) ;
et
une pluralité de roulettes du côté gauche (118) et une pluralité de roulettes du côté droit (120) fixées de manière pivotante sur le dessous, chaque roulette comportant une roue gauche et une roue droite séparées par un espace de roue ;
et
un ensemble de rails (110) à proximité du plancher de cabine et parallèles à l'axe d'entrée, l'ensemble de rails comprenant :
un rail gauche à proximité de la paroi latérale gauche, le rail gauche comportant un rail de guidage gauche (136) configuré pour s'étendre dans au moins un espace de roue de la pluralité de roulettes du côté gauche ;
et
un rail droit à proximité de la paroi latérale droite, le rail droit comportant un rail de guidage droit (136) configuré pour s'étendre dans au moins un espace de roue de la pluralité de roulettes du côté droit.

2. Compartiment de chariot de cuisine selon la revendication 1, dans lequel au moins l'un parmi le rail gauche et le rail droit est monté sur le plancher de cabine.

3. Compartiment de chariot de cuisine selon la revendication 1 ou 2, dans lequel :
le rail gauche est monté sur la paroi latérale gauche ;
et
le rail droit est monté sur la paroi latérale droite.

4. Compartiment de chariot de cuisine selon une quelconque revendication précédente, comprenant en outre :
au moins une bande de frottement gauche (108) montée sur la paroi latérale gauche et s'étendant parallèlement à l'axe d'entrée ;
et
au moins une bande de frottement droite (108) montée sur la paroi latérale droite et s'étendant parallèlement à l'axe d'entrée.

5. Compartiment de chariot de cuisine selon la revendication 4, dans lequel :
le rail gauche est monté sur la bande de frottement gauche ; et
le rail droit est monté sur la bande de frottement droite, ou dans lequel :
le rail gauche et la bande de frottement gauche sont montés collectivement sur la paroi latérale gauche ;
et
le rail droit et la bande de frottement droite sont montées collectivement sur la paroi latérale droite.

6. Compartiment de chariot de cuisine selon une quelconque revendication précédente, dans lequel au moins l'un parmi le rail de guidage gauche et le rail de guidage droit a au moins l'un d'un bord arrondi et d'une section transversale arrondie.

7. Compartiment de chariot de cuisine selon une quelconque revendication précédente, dans lequel le chariot de cuisine est un premier chariot de cuisine et :
le chariot de cuisine a une profondeur de chariot parallèle à l'axe d'entrée ;
le compartiment intérieur a une profondeur de compartiment parallèle à l'axe d'entrée, la profondeur de compartiment étant au moins le double de la profondeur de chariot ;
et
le compartiment intérieur est configuré pour loger au moins le premier chariot de cuisine et un second chariot de cuisine, le second chariot de cuisine ayant également la profondeur de chariot.
